(19)

Europäisches
Patentamt

European
Patent Office

Office européen
des brevets

(11) **EP 2 874 109 A1**

(12) **EUROPEAN PATENT APPLICATION**

(43) Date of publication:
**20.05.2015 Bulletin 2015/21**

(21) Application number: **13290288.3**

(22) Date of filing: **18.11.2013**

(51) Int Cl.:
*G06Q 10/02* <sup>(2012.01)</sup>   *G06Q 50/14* <sup>(2012.01)</sup>

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Amadeus S.A.S.**
**06410 Biot (FR)**

(72) Inventor: **Canis, Laure**
**06300 Nice (FR)**

(74) Representative: **Samson & Partner Patentanwälte
mbB**
**Widenmayerstraße 6**
**80538 München (DE)**

(54) **Search engine for identifying business travel proposals**

(57)    Systems, methods, and computer program products for ranking and selecting travel-related search results for display to a traveler. The system may receive data identifying a preferred travel proposal from each of a plurality of travelers, and analyze the data to determine a value utility function. The value utility function may then be used to assign a relative utility to travel proposals identified in response to a search query from a traveler. Additional data relating to a pricing sensitivity of a payer may be received from an entity paying for travel, such as a corporation or other business entity. The system may analyze the pricing sensitivity data to define a price utility function that quantifies the price of each travel proposal. A composite utility function that is a weighted sum of the value and price utility functions may be used to select search results for display to the traveler.

FIG. 1

**Description**

BACKGROUND

The invention generally relates to computers and computer software, and in particular to methods, systems, and computer program products for providing search results in response to search queries for travel-related products.
Travelers engaging in business-related travel for a corporation or other business entity may search for and book travel products through a computerized reservation system. To find travel products that satisfy the traveler's trip requirements, the traveler will typically provide search terms in the form of a search query to the reservation system. In response to receiving the search query, the reservation system may search one or more databases to identify travel products that match the parameters in the search query. Matching travel products may then be displayed as part of one or more travel proposals that can be reserved or purchased by the traveler.
Depending on the search terms provided by the traveler, the search engine of the reservation system may return a large number of travel proposals. Typically, the search results are provided as a list of travel proposals, with only a portion of the list being displayed at a time. If the traveler does not find a satisfactory travel proposal in the initially displayed search results, the traveler may scroll down the list or otherwise request another portion of the list be displayed. The traveler is therefore presented with the task of sorting through a large number of travel proposals to find travel proposals that satisfy their needs.
Travelers overwhelmed by the number of travel proposals presented may have a difficult time selecting a travel proposal, or may give up and select a less than optimal travel proposal near the top of the list. Search results presenting too many options to the traveler may also confuse the traveler, increasing the amount of time taken to complete the booking process. Business travelers in particular may be presented with many irrelevant options, such as travel proposals including flights that are incompatible with their schedules or that are too lengthy. The business entity paying for the trip may also prefer that employees choose travel options which comply with corporate travel policies and/or that have lower negotiated rates. At the same time, the corporation may wish to maintain employee satisfaction by taking into account the preferences of the employee.
Thus, improved systems, methods, and computer program products are needed to search for and book travel proposals that improve the ability of travelers to identify travel proposals that both meet their needs and those of the business entity for which they are traveling.

SUMMARY

In an embodiment of the invention, a method of characterizing a plurality of travel proposals that satisfies a travel request is provided. The method includes receiving first data identifying a preferred travel proposal for each of a plurality of travelers. Each preferred travel proposal is selected from within the plurality of travel proposals, and the first data is analyzed to define a first utility function that quantifies a value of each travel proposal. The method further includes receiving second data relating to a price sensitivity from a payer, and analyzing the second data to define a second utility function that quantifies a price of each travel proposal. A third utility function having an output that quantifies a composite utility for each travel proposal may then be defined as a weighted sum of the first and second utility functions.
In another embodiment of the invention, an apparatus is presented that characterizes the plurality of travel proposals that satisfies the travel request. The apparatus includes a processor and a memory operatively coupled with the processor. The memory includes program instructions that, when executed by the processor, causes the apparatus to receive the first data identifying the preferred travel proposal for each of the plurality of travelers, each preferred travel proposal being selected from the plurality of travel proposals. The apparatus analyzes the first data to define the first utility function that quantifies the value of each travel proposal. The apparatus further receives second data relating to the price sensitivity from the payer, and analyzes the second data to define the second utility function that quantifies the price of each travel proposal. The third utility function is then defined by the apparatus as the weighted sum of the first and second utility functions so that the third utility function has an output that quantifies a composite utility for each travel proposal.
In another embodiment of the invention, a computer program product is provided. The computer program product includes a non-transitory computer readable storage medium that stores program instructions. The program instructions are configured so that, when executed by the processor, they cause the processor to receive the first data identifying the preferred travel proposal for each of the plurality of travelers, each preferred travel proposal being selected from the plurality of travel proposals. The program instructions cause the processor to analyze the first data to define the first utility function that quantifies the value of each travel proposal. The program instructions may be further configured to cause the processor to receive the second data relating to the price sensitivity from the payer and analyze the second data to define the second utility function that quantifies the price of each travel proposal. The program instructions may then cause the processor to define the third utility function having an output that quantifies the composite utility for each travel proposal function as the weighted sum of the first and second utility functions.

BRIEF DESCRIPTION OF THE SEVERAL VIEWS OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a diagrammatic view of an exemplary operating environment including a computerized reservation system in communication with a plurality of computer systems via a network.
FIG. 2 is a diagrammatic view of an exemplary computer system of FIG. 1.
FIG. 3 is a diagrammatic view of a graph depicting a plurality of iso-utility curves.
FIG. 4 is a diagrammatic view of a process by which the reservation system of FIG. 1 may select travel proposals for display to a traveler.
FIG. 5 is a diagrammatic view of a graph including a utility function curve defining a price utility function that may be used by the process in FIG. 4.
FIG. 6 is a flow diagram depicting a process by which the reservation system may determine parameter weights for a value utility function that may be used by the process in FIG. 4.
FIG. 7 is a flow diagram depicting a process by which the reservation system may determine an optimal number of typical traveler profiles.

DETAILED DESCRIPTION

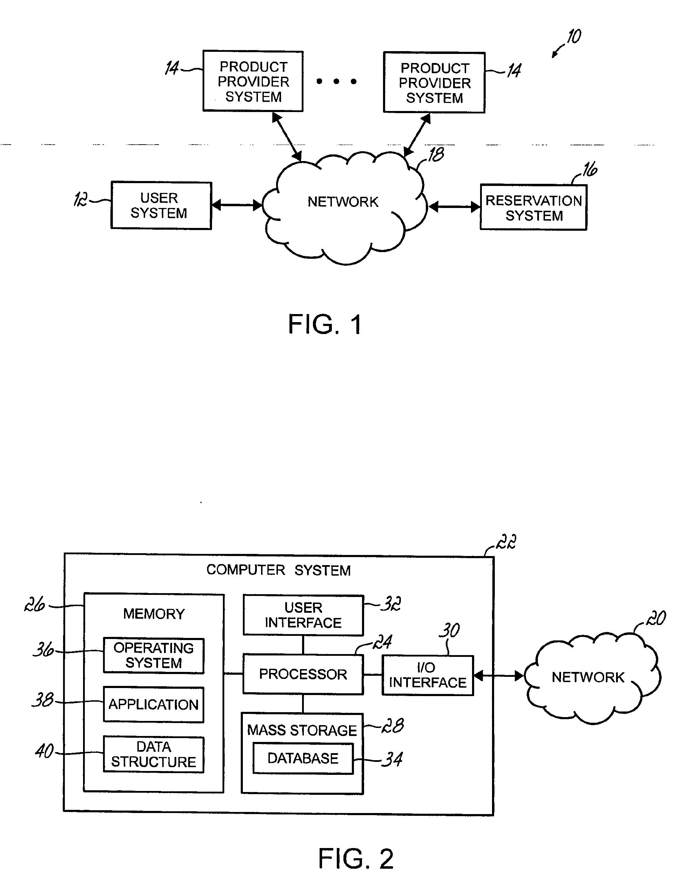

Embodiments of the invention are directed to systems and methods for providing users with travel-related search results. In particular, a reservation system may provide search results relating to travel in which the traveler is not the paying party or "payer" for the travel. One example in which the traveler and the payer may not be the same entity is business travel. With business travel, a corporation or other business entity typically pays the travel expenses for the traveling employee. To identify travel proposals that satisfy a search query, the reservation system may search for travel-related products and services from multiple sources. These sources may include a Global Distribution System (GDS), travel product providers such as airlines and hotels, third party travel product providers, on-line travel agencies, or any other suitable database of travel-related products.
To aid in selecting the most relevant search results to display to the traveler, the reservation system may extract value preferences from the travelers and cost preferences from the payer. These preferences may then be used to define a composite utility function for determining a relative utility of travel proposals returned by a search query. The composite utility function may be used to rank travel proposals returned by the search query so that the most relevant search results can be selected for display to the traveler. The reservation system may thereby take into account both the payer's and the traveler's preferences in determining which search results to display to the traveler.
To this end, each search result may be evaluated based on: (1) a price utility function that quantifies the price of the travel product base on the preferences of the payer; and (2) a value utility function that quantifies the value of the travel product to the traveler. Composite utility values for each search result may be determined based on a weighted sum of the quantified price and value. Search results may then be selected for display to the traveler based on their composite utility.
Referring now to FIG. 1, an operating environment 10 in accordance with an embodiment of the invention may include a user system 12, one or more product provider systems 14, and a reservation system 16 in communication via a network 18. The network 18 may include one or more private and/or public networks (e.g., the Internet) that enable the exchange of data between the systems. In an embodiment of the invention, the reservation system 16 may be part of Global Distribution System (GDS), a travel management system, or any other suitable computer system used to reserve and/or book travel products.
The user system 12 may be a desktop computer, laptop computer, tablet computer, smart phone, or any other computing device that provides the user with access to the systems 12, 14, 16 connected to the network 18. The product provider systems 14 and/or reservation system 16 may each host one or more databases for storing information relating to travel products. These databases may include data relating to travel products provided by an online travel agency, meta-search engine, airline, hotel, GDS or any other provider or seller of travel products. The product provider systems 14 may be configured to provide data relating to travel products to the reservation system 16. This data may be provided in response to database queries from the reservation system 16. In this way, travelers may be able to search for and reserve travel products sold by the product provider through the reservation system 16. The reservation system 16 may also include a database of travel products. The reservation system 16 may thereby allow users to search for, reserve, and/or book travel products via a suitable software application, such as a web browser, running on the user system 12.

The reservation system 16 may be maintained by the business entity, a travel management company, or an operator of the GDS to manage employee travel for the business entity.

Referring now to FIG. 2, the user system 12, product provider systems 14, and reservation system 16 of operating environment 10 may be implemented on one or more computer devices or systems, such as exemplary computer system 22. The computer system 22 may include a processor 24, a memory 26, a mass storage memory device 28, an input/output (I/O) interface 30, and a user interface 32.

The processor 24 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 26. The memory 26 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 28 may include data storage devices such as a hard drive, optical drive, tape drive, non-volatile solid state device, or any other device capable of storing information. A database 34 may reside on the mass storage memory device 28, and may be used to collect and organize data used by the various systems, applications, modules, and tools described herein.

Processor 24 may operate under the control of an operating system 36 that resides in memory 26. The operating system 36 may manage computer resources so that computer program code or instructions embodied as one or more computer software applications, such as application 38 residing in memory 26, may have program instructions executed by the processor 24. In an alternative embodiment, the processor 24 may execute the applications 38 directly, in which case the operating system 36 may be omitted. One or more data structures 40 may also reside in memory 26, and may be used by the processor 24, operating system 36, and/or application 38 to store or manipulate data.

The I/O interface 30 may provide a machine interface that operatively couples the processor 24 to other devices and systems, such as the network 18. The application 38 may thereby work cooperatively with the network 18 by communicating via the I/O interface 30 to provide the various features, functions, and/or modules comprising embodiments of the invention. The application 38 may also include program code that is executed by one or more external resources (not shown), or otherwise rely on functions and/or signals provided by other system or network components external to the computer system 22. Indeed, given the nearly endless hardware and software configurations possible, persons having ordinary skill in the art will understand that embodiments of the invention may include applications that are located externally to the computer system 22, distributed among multiple computers or other external resources, or provided by computing resources (hardware and software) that are provided as a service over the network 18, such as a cloud computing service.

The user interface 32 may be operatively coupled to the processor 24 of computer system 22 in a known manner to allow a user to interact directly with the computer system 22. The user interface 32 may include video and/or alphanumeric displays, a touch screen, a speaker, and any other suitable audio, visual, and/or tactile indicators capable of providing information to the user. The user interface 32 may also include input devices and controls such as an alphanumeric keyboard, a pointing device, keypads, pushbuttons, control knobs, microphones, etc., capable of accepting commands or input from the user and transmitting the entered input to the processor 24.

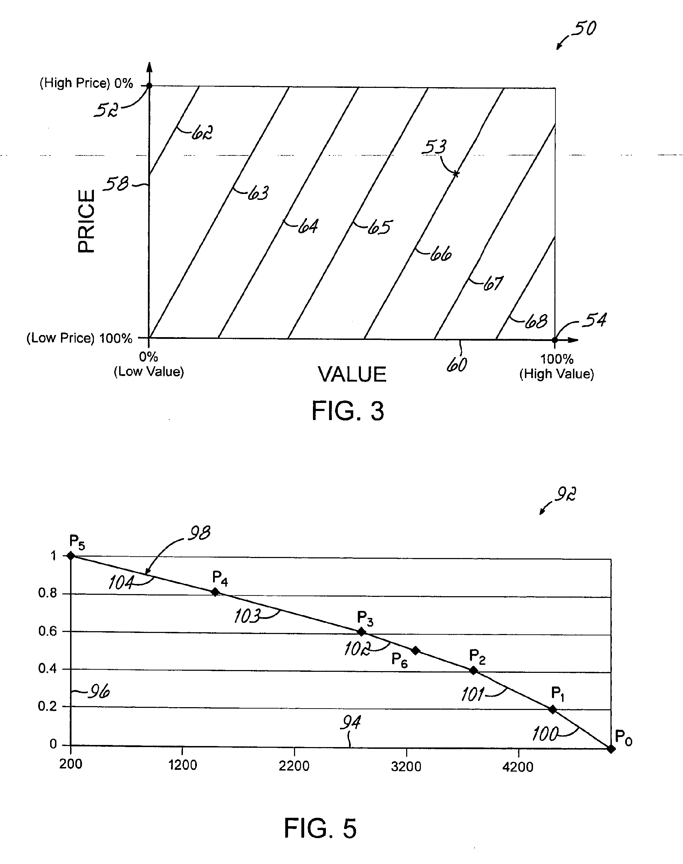

Referring now to FIG. 3, an exemplary graph 50 depicts a two-dimensional representation of utility for a plurality of travel proposals represented by markers 52-54. The graph 50 includes a vertical axis 58 representing a price utility of the travel proposals, and a horizontal axis 60 representing a value utility of the travel proposals. Each of the price and value utilities may have a minimum value of 0% or 0, and a maximum value of 100% or 1, with 0 representing the lowest utility (e.g., the highest price or lowest value possible) and 1 representing the highest utility (e.g., lowest price or highest value possible). The upper and lower boundaries of the inputs to the utility functions may be determined based on travel proposals that satisfy a particular type of search query, such as a query for travel between a particular origination-destination city pair. That is, the upper and lower boundaries may be set to correspond with the highest and lowest values and prices of a set of travel proposals that satisfies a particular query. The upper and lower boundaries may also be determined based on a set of travel proposals that encompasses a plurality of travel searches, for all travel proposals in a database, or for any other suitable set of travel proposals. The upper and lower boundaries may also be determined based on selected values. For example, the highest value may represent a hypothetical travel proposal having parameters selected to match all the preferences of the traveler, even though a travel proposal matching all preferences may not actually be available. By way of example, marker 52 may represent a hypothetical worst possible travel proposal having the highest price and lowest value possible. Marker 54 may represent a hypothetical best possible travel proposal having the highest value and lowest price possible. Accordingly, the price and value utilities of marker 52 may be (0, 0), and the price and value utilities of marker 54 may be (1, 1).

The position of markers 52-54 on the graph 50 may be determined by a price utility function that quantifies the price of the corresponding travel proposal, and a value utility function that quantifies the value of the corresponding travel proposal. The price and value utility functions may thereby map each travel proposal to a position on the graph 50. This mapping may be based on the impact of the price as determined from data elicited from the payer, and the value of the travel proposal as determined from data elicited from one or more travelers. A composite utility for the travel proposal may be determined based on a weighted sum of the price and value utilities. The composite utility may in turn be used to determine which travel proposals to display to the traveler from a plurality of search results.

The graph 50 further includes a plurality of iso-utility curves 62-68 representing points on the graph 50 having an equal composite utility. That is, the weighted sum of the price utility and the value utility may be constant for all points on the iso-utility curve 62-68 in question. As can be seen from the iso-utility curves 62-68, as the price utility increases (i.e., the price of the travel proposal drops), the value utility tends to decrease to reflect the generally reduced value of lower price travel proposals. In the depicted graph 50, the iso-utility curves 62-68 may represent a generally increasing composite utility for points lower and further to the right on the graph 50. Thus, the travel proposal represented by marker 53 may have a higher composite utility than the travel proposal represented by marker 52, and a lower composite utility than the travel proposal represented by marker 54.

In any case, the travel proposal having the highest composite utility may not always be the travel proposal having the lowest price or the highest value to the traveler. The travel proposal having the highest composite utility may also depend on the weighting of the price and value utility functions. Typically, neither the worst nor the best possible travel proposals are actually available. Rather, the reservation system 16 may attempt to get as close as possible to the hypothetical best possible travel proposal by finding the best existing compromise between price and value.

The value utility may be determined based on a weighted sum of a plurality of traveler preferences:

$$V = \sum w_c \times u_c(v_c) \quad (\text{Equation 1})$$

where V is the value utility, $w_c$ is the weight applied to a corresponding parameter of the travel proposal, $u_c$ is the utility function for the parameter, and $v_c$ represents the value of the parameter. The utility function $u_c$ may have a binary output that depends on the presence or absence of the parameter (e.g., presence of an airline rewards program), or may have a scaled output between 0 and 1 that depends on the value of the parameter (e.g., flight time). In an exemplary embodiment, the weights may be selected so that the sum of the weights is unity, as shown by Equation 2:

$$\sum w_c = 1 \quad (\text{Equation 2})$$

Using the weights $w_c$ in Equation 2, a travel proposal having a set of parameters that fully satisfies every traveler preference would therefore have a value utility of 1. A travel proposal having a set of parameters that failed to even partially satisfy any of the traveler preferences would have a value utility of 0. Examples of parameters that may be used to determine the value utility of a travel proposal may include, but are not limited to: a flight length, a flight arrival time, a hotel rating, a distance between a hotel and a meeting place, a presence of an airline rewards program, and a presence of a hotel rewards program. Parameters may also be used as constraints to eliminate travel proposals from consideration. For example, if the time between the last scheduled meeting of a business trip and the flight departure time of a travel proposal is less than a predetermined amount, the travel proposal may be excluded from the search results. The minimum allowed time could be a fixed amount of time, or could be determined based on a trip parameter, such as a distance or an estimated travel time between a last scheduled meeting location and the airport.

The price utility may be determined using the price utility function $u_p(P)$, which may return a utility of between 0 and 1 in dependence on the price P. The price utility function $u_p(P)$ may be a function that expresses how the price of the travel proposal is evaluated by the payer. The composite utility $U(P, V)$ of the travel proposal may then be determined based on a weighted sum of the value utility and the price utility as follows:

$$U(P_x, V_x) = w_p \times u_p(P_x) + \left(1 - w_p\right) \times V_x \quad (\text{Equation 3})$$

Equation 3 may also be written in expanded form by substituting Equation 2 for $V_x$ to yield:

$$U(P_x, V_x) = w_p \times u_p(P_x) + (1 - w_p) \times \sum w_c \times u_c(v_c) \quad \text{(Equation 4)}$$

where $P_x$ represents the price of a travel proposal $T_x$, $V_x$ represents the value utility of the travel proposal $T_x$, and $w_p$ is a price weight or "balance factor".

The value utility may be defined to reflect the traveler's preferences without regard to price. The value utility may thereby quantify how travelers value a travel proposal independently of the price so that the output of the value utility is solely a function of the travel proposal value components $v_c$.

The price weight $w_p$ may have a numerical value between 0 and 1 that reflects the relative importance of price verses value as determined by the payer. A plurality of travel proposals, such as travel proposals returned in response to a search query, may be characterized by evaluating $U(P_x, V_x)$ for each of the travel proposals $T_x$. A travel proposal $T_1$ may be preferred over travel proposal $T_2$ if $U(P_1, V_1) > U(P_2, V_2)$. The composite utility $U(P_x, V_x)$ may thereby be used to determine which travel proposals to display to the traveler.

The price utility function $u_p$ may be configured to reflect the payer's sensitivity to price. To this end, the payer may define price preferences between different travel proposals, or "intra-price" preferences, over a range of prices that encompasses the travel proposals $T_x$ being evaluated. A simple price utility function $u_p$ may have a linear relationship with price. For example, price of $0 could have a utility of 1, and the highest price the payer would be willing to pay could have a utility of 0, with the utility function being defined by a line connecting these two points. More complex price utilities $u_p$ that have non-linear relationships between price and utility may also be defined. The payer may also define how much weight to place on price verses value. This price weight may provide the balance factor between the business entity's interest in controlling prices and their interest in satisfying the travel preferences of the traveler.

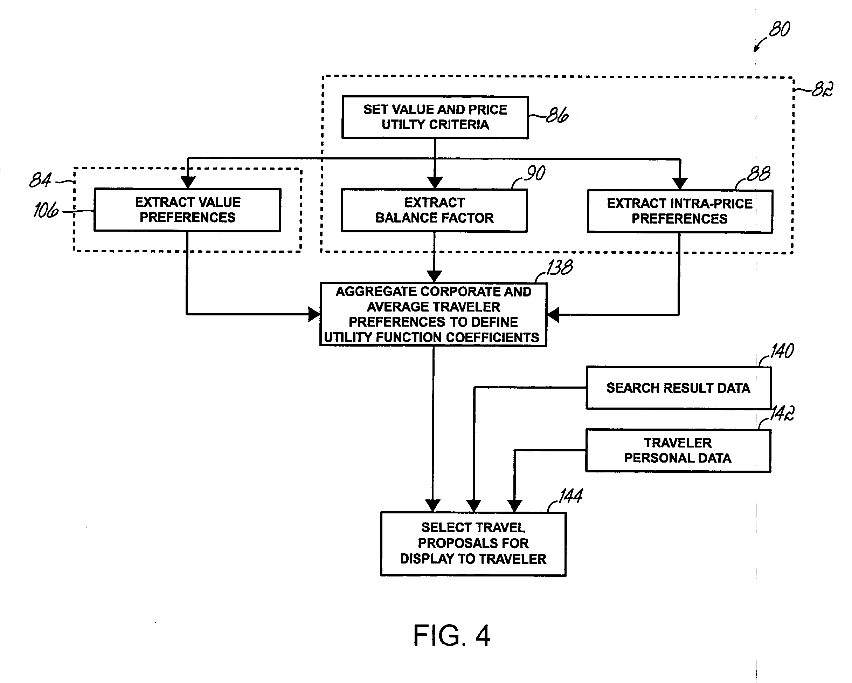

Referring now to FIG. 4, a process 80 for selecting travel proposals to display to the traveler is presented. The process 80 may be performed by the reservation system 16, and may include a group 82 of one or more processes that involve eliciting information from the payer, and a group 84 of one or more processes that involve eliciting information from one or more travelers. The elicited data may then be aggregated and used to define the utility functions that are in turn used to select travel proposals for display to the traveler.

In block 86, the payer may provide data to the reservation system 16 that identifies the criteria used to define the utility function $U(P_x, V_x)$. The criteria may include value parameters and constraint parameters. Value parameters may include parameters that can produce a range of outputs when plugged into their respective utility function $u_c$, $u_p$. Value parameters may be specific to a particular origination-destination city pair, such as flight length or arrival time, or non-specific. Examples of non-specific city pair value parameters may include, but are not limited to: price of the travel proposal, hotel rating, distance between the hotel and a location of a scheduled activity, and presence or absence of airline and/or hotel rewards programs. Constraint parameters may relate to necessary criteria of the travel proposal - i.e., criteria of the travel proposal which are necessary to satisfy trip requirements. Examples of constraint parameters may include, but are not limited to: carrier arrangements, and the time between the last scheduled activity of the trip and the scheduled departure time of the return flight.

For each selected criterion, one or more boundaries may be defined for the parameters of the criterion. These boundaries may include an upper boundary and a lower boundary. In an embodiment of the invention, the boundary representing the best-case parameter value (e.g., shortest available flight time) may be assigned a utility of 1, and the boundary representing the worst-case parameter (e.g., longest available flight time) may be assigned a utility of 1. For a binary criterion (e.g., a criterion comprising a parameter having a yes/no value), the desired parameter value may produce a utility of 1, and the undesired parameter value may produce a utility of 0. In the case of parameters having continuous values, the utility functions $u_c(v_c)$ may have a linear output between the upper and lower boundaries.

To this end, the travel criteria utility function $u_c(v_c)$ may be defined as a linear function having an output of 0 for a value of its corresponding criteria $v_c$ at or below a minimum level (e.g., the lower boundary), and an output of 1 for a value of its corresponding criteria $v_c$ at or above a maximum level (e.g., the upper boundary). Equation 5 provides an exemplary parameter utility function for a criterion $v_c$ in which a higher criterion parameter value provides a correspondingly higher value to the traveler:

$$u_c(v_c) = \begin{cases} 1, & v_c \geq v_{c\_max} \\ \dfrac{v_c - v_{c\_min}}{v_{c\_max} - v_{c\_min}}, & v_{c\_max} \geq v_c \geq v_{c\_min} \\ 0, & v_c \leq v_{c\_min} \end{cases} \quad \text{(Equation 5)}$$

Equation 6 below may provide an exemplary parameter utility function for a criterion $v_c$ in which a lower criterion parameter value provides a correspondingly higher value to the traveler, such as flight time:

$$u_c(v_c) = \begin{cases} 0 \, , & v_c \geq v_{c\_max} \\ \dfrac{v_{c\_max} - v_c}{v_{c\_max} - v_{c\_min}} \, , & v_{c\_max} \geq v_c \geq v_{c\_min} \\ 1 \, , & v_c \leq v_{c\_min} \end{cases} \quad \text{(Equation 6)}$$

Similarly, a linear price value function may be provided by:

$$u_p(P) = \begin{cases} 1 \, , & P \leq P_{min} \\ \dfrac{P - P_{max}}{P_{min} - P_{max}} \, , & P_{max} \geq P \geq P_{min} \\ 0 \, , & P \geq P_{max} \end{cases} \quad \text{(Equation 7)}$$

although other price functions having slopes that vary with price, and/or price mapping functions defined by the payer may also be used.

In block 88, the reservation system 16 may extract the payer's intra-price preferences based on the payer's responses to one or more queries. One type of query may present the payer with two travel proposals $T_1$, $T_2$. Travel proposal $T_1$ may be characterized by a price $P_1$ and a value utility $V_1$, and travel proposal $T_2$ may be characterized by a price $P_2$ and a value utility $V_2$. In an embodiment of the invention, each of the value utilities $V_1$, $V_2$ may be associated with a corresponding set of parameters that define the selected criteria of the respective travel proposals $T_1$, $T_2$. The selected criteria may be such that travel proposal $T_1$ has a lower value utility $V_1$ and a correspondingly lower price $P_1$ than travel proposal $T_2$. The information provided to the payer may omit the price or value of one of the travel proposals $T_1$, $T_2$. For example, the payer may be provided with $T_1 = (P_1, V_1)$, $T_2 = (P_2, X_2)$, or $T_1 = (X_1, V_1)$, $T_2 = (P_2, V_2)$, where $X_1$ represents an empty price field and $X_2$ represents an empty value field in the data received by the payer.

In the case where price $V_2$ is omitted, the payer may be asked to define a value of $V_2$ that would result in the composite utility $U(P_1, V_1)$ being equal to the composite utility $U(P_2, V_2)$. That is, the reservation system 16 may ask the payer to define the minimum value $V_2$ that travel option $T_2$ would need to have for the payer to accept the price increase from $P_1$ to $P_2$. In the case where price $P_1$ is omitted, the payer may be asked to define a price $P_1$ that would result in the composite utility $U(P_1, V_1)$ being equal to composite utility $U(P_2, V_2)$. That is, the reservation system 16 may ask the payer to define a minimum price difference $P_2-P_1$ that would be necessary to accept the decrease in value from $V_2$ to $V_1$. Embodiments of the invention may also include cases in which $V_1$ or $P_2$ is omitted from the data, and the payer is asked to define these values so that $U(P_1, V_1) = U(P_2, V_2)$. Entering the values provided by the payer into Equation 3 yields:

$$w_p \times u_p(P_1) + \left(1 - w_p\right) \times V_1 = w_p \times u_p(P_2) + \left(1 - w_p\right) \times V_2 \quad \text{(Equation 8)}$$

As described in more detail below, the reservation system 16 may define a price utility function $u_p$ for the payer by mapping the output of price utility function $u_p$ for one or more input prices $P_x$ using Equation 8 and the values $X_x$ provided by the payer.

By way of example, price $P_0$ may be set to the highest price the payer is willing to accept for a travel proposal, e.g., \$5000. The price $P_0$ may also be associated with a sample number of 0 in an array, which may be maintained as part of a database. Because this worst case price has a utility of 0 by definition, it may be shown that:

$$u_p(P_0) = 0 \quad \text{(Equation 9)}$$

Similarly, picking a best case travel proposal $T_0$ that satisfies all the traveler preferences (e.g., shortest flight and a highest rated hotel available) may result in a known value utility:

$$V_0 = 1 \quad \text{(Equation 10)}$$

The payer may then be asked what difference in price $\delta_1$ would be required so that a travel proposal $T_1$ having a value utility $V_1 = 0$ (e.g., longest flight and lowest rated hotel available) would have the same composite utility as travel proposal $T_0$. That is, the payer may be asked to determine a price $P_1 = P_0 - \delta_1$ that would yield:

$$U(P_0, 1) = U(P_1, 0) \quad \text{(Equation 11)}$$

In response to the above query in our current example, the payer may provide data indicating that a $\delta_1$ = $500, which would result in a price $P_1$ of $4500, would be sufficient to satisfy Equation 11. The sample number may be incremented (e.g., from 0 to 1) and associated with the price $P_1$ in the array.

The process of extracting intra-price references may continue with the reservation system 16 re-defining the worst case price as equal to $P_1$ so that:

$$u_p(P_1) = 0 \quad \text{(Equation 12)}$$

and selecting the best case travel proposal that satisfies all the traveler preferences (e.g., shortest flight and a highest rated hotel available) so that:

$$V_1 = 1 \quad \text{(Equation 13)}$$

The payer may then be asked what difference in price $\delta_2$ would be required so that a travel proposal $T_2$ having a value utility $V_2 = 0$ (e.g., longest flight and lowest rated hotel available) would have the same composite utility as travel proposal $T_1$. That is, the payer may be asked to determine a price $P_2 = P_1 - \delta_2$ that would yield:

$$U(P_1, 1) = U(P_2, 0) \quad \text{(Equation 14)}$$

As before, the sample number may be incremented (e.g., from 1 to 2) and associated with the price $P_2$ in the array. By way of example, in response to the above query, the payer may provide data indicating that $\delta_2$ = $700, which would result in a price $P_2$ of $3800, would be sufficient to satisfy Equation 14.

The above process may be repeated by re-defining the worst case price as equal to the discounted price $P_{n+1}$, and asking the payer for a new price difference $\delta_{n+1}$ so that

$$U(P_n, 1) = U(P_{n+1}, 0) \quad \text{(Equation 15)}$$

until $P_n$ reaches a price $P_m$ at which further discounts would cause the price $P_{m+1}$ to be negative. That is, the process may continue until a price $P_{m+1}$ cannot be defined because the price $P_m$ can no longer be discounted enough so that $U(P_m, 1) = U(P_{m+1}, 0)$. In this way, the array may be defined to include a plurality of m+1 prices $[P_0, P_1, ... P_m]$ such that:

$$[P_0, P_1, P_2 ... P_m] \quad \text{(Array 1)}$$

For the purposes of illustration, and continuing the above example, an exemplary array of prices may be provided by:

$$[P_0, P_1, P_2, P_3, P_4] = [\$5000, \$4500, \$3800, \$2800, \$1500] \quad \text{(Equation 16)}$$

with

$$m = 4 \quad \text{(Equation 16)}$$

To add an additional data point below $P_m$ (e.g., \$1500), the reservation system 16 may define a price $P_{m+1}$ having a value below $P_m$ (e.g., $P_5$ = \$200). The reservation system 16 may further define $P_{m+1}$ as the best possible price so that $u_p(P_{m+1}) = 1$, and couple $P_{m+1}$ with a worst case value to define a travel proposal $T_{m+1}$ that has a $V_{m+1}$ = 0. The payer may then be asked to define a minimum value $V_m$ that would satisfy the following equation:

$$U(P_m, V_m) = U(P_{m+1}, 0) \quad \text{(Equation 17)}$$

In an embodiment of the invention, the value $V_m$ may be determined by querying the payer for one or more parameters that would sufficiently alter the travel proposal parameters so that the composite utilities of $T_m$ and $T_{m+1}$ would be equal. For travel proposals $T_m$, $T_m+1$ that include an airline flight and a hotel, the payer may be asked if increasing the hotel rating from the lowest available rating, or reducing the flight duration from the longest available flight, would be sufficient to raise the value of $V_m$ so that $U(P_m, V_m) = U(P_{m+1}, 0)$.

By way of example, a worst case travel proposal may have a flight duration of 20 hours and a hotel rating of two stars. In this exemplary case, the payer may respond that raising the hotel rating to four stars would be sufficient to satisfy Equation 17. The payer may be further asked if the hotel rating was one level below the required level (e.g., three stars), how much would the flight duration need to be reduced to satisfy Equation 17. The payer may also be asked how much the flight duration would need to be reduced to satisfy Equation 17 with a travel proposal retaining the two star hotel rating. This query may be made, for example, in response to the payer indicating that raising the hotel rating the highest rating (e.g., five stars) alone would not be sufficient to satisfy Equation 17.

In any case, the value utility $V_m$ may be determined by taking the ratios of the improved parameters and the worst case parameters and entering the ratios into Equation 1. By way of example, a two parameter value utility function may have a flight duration weight $w_{c\_flight\_duration}$ = 2/3 and a hotel rating weight $w_{c\_flight\_duration}$ = 1/3. If the payer responded that reducing the flight time from 20 hours to 17 hours would balance equation 17, the value $V_m$ in this example would be given by:

$$V_m = \frac{1}{3} \times \frac{2\ stars}{2\ stars} + \frac{2}{3} \times \frac{17\ hours}{20\ hours} = 0.90 \quad \text{(Equation 18)}$$

In block 90, the price weight $w_p$ or balance factor may be determined based on the values of $m$ and $V_m$. From Equation 15, it is known that $U(P_n, 0) = U(P_{n-1}, 1)$. Substituting these values into Equation 3 yields:

$$w_p \times u_p(P_n) = w_p \times u_p(P_{n-1}) + (1 - w_p) \quad \text{(Equation 19)}$$

which may be simplified to:

$$u_p(P_n) = u_p(P_{n-1}) + \frac{(1 - w_p)}{w_p} \quad \text{(Equation 20)}$$

Thus, for each incremental increase in $n$, $u_p(P_n)$ increases by $(1 - w_p)/w_p$. Starting with $u_p(P_0) = 0$, it may be

seen that $u_p(P_n)$ can be determined for each value of n using the following relationship:

$$u_p(P_n) = \frac{n \times (1 - w_p)}{w_p} \quad \text{(Equation 21)}$$

for values of n such that:

$$\frac{n \times (1 - w_p)}{w_p} \leq 1 \quad \text{(Equation 22)}$$

Returning to the above exemplary travel proposals $T_m$ and $T_{m+1}$ having a best case price $P_{m+1}$ (e.g., $P_5 = \$200$) so that $u_p(P_{m+1}) = 1$ and the worst case value $V_{m+1} = 0$ that satisfies the relationship $U(P_m, V_m) = U(P_{m+1}, 0)$, and substituting the prices and value utilities into Equation 3 yields:

$$w_p = w_p \times u_p(P_m) + (1 - w_p) \times V_m \quad \text{(Equation 23)}$$

Substituting for $u_p(P_m)$ using Equation 21 further yields:

$$w_p = w_p \times \frac{m \times (1 - w_p)}{w_p} + (1 - w_p) \times V_m \quad \text{(Equation 24)}$$

Solving Equation 24 for $w_p$ yields:

$$w_p = \frac{(m + V_m)}{(m + 1 + V_m)} \quad \text{(Equation 25)}$$

Equation 25 may be used to determine a price weight $w_p$ for each value of $P_n$ using the values of m and $V_m$. Using the values of $m$ and $V_m$ determined for the exemplary travel proposals, the value of $w_p$ at price $P_m$ may be determined by substituting these values into Equation 25. Using the values in the current example, Equation 25 yields:

$$w_p = \frac{4 + 0.9}{4 + 1 + 0.9} \cong 0.83 \quad \text{(Equation 26)}$$

Referring to FIG. 5, a graph 92 having a horizontal axis 94 representing the price $P_n$ of a travel proposal $T_n$, and a vertical axis 96 representing the price weight $w_p$ includes a plot 98 illustrating $w_p$ as determined for each price $P_n$ in the above numerical example. The plot 98 may thereby define the price utility function $u_p(P)$ for the above example.

Values of $w_p$ for travel proposals having prices that fall between mapped points may be determined by connecting the points with linear segments 100-104 and projecting the price on to the resulting plot 98. To provide a smoother, more precise mapping function, additional points may be added to the plot 98 between the mapped points $P_k$ and $P_{k+1}$ by eliciting additional information from the payer. For example, a new point $P_6$ representing a price having a utility $u_p(P_6)$ = 0.5 may be added between points $P_2$ and $P_3$. A value utility $V_{new}$ may be determined by:

$$V_{new} = \frac{w_p}{(1 - w_p)} \times \left( u_p(P_{new}) - u_p(P_k) \right) \quad \text{(Equation 27)}$$

Starting with the closest mapped point $P_k$ having a price higher than the point to be added (e.g., $P_2$ = \$3800), the payer may be asked for a price P such that:

$$U(P, 0) = U(P_k, V_{new}) \quad \text{(Equation 28)}$$

The price P may then be mapped to the new utility point between $u_p(P_k)$ and $u_p(P_{k+1})$.

In block 106 of process 80, the reservation system 16 may extract value preferences from the traveler. These value preferences may, in turn, be used to determine the value utility function V. To this end, the reservation system 16 may query the traveler to select their preferred travel proposal without regard to cost. This query may be made in response to the traveler booking a trip, in response to the reservation system 16 displaying search results, or at any other suitable time during the travel reservation process. For example, after the traveler books a travel proposal, the reservation system 16 may ask the traveler which travel proposal of the plurality of travel proposals that satisfied the trip requirements would have been selected if price were not a factor. Data indicative of the traveler's selection may then be stored in a database for use in determining the value utility function V.

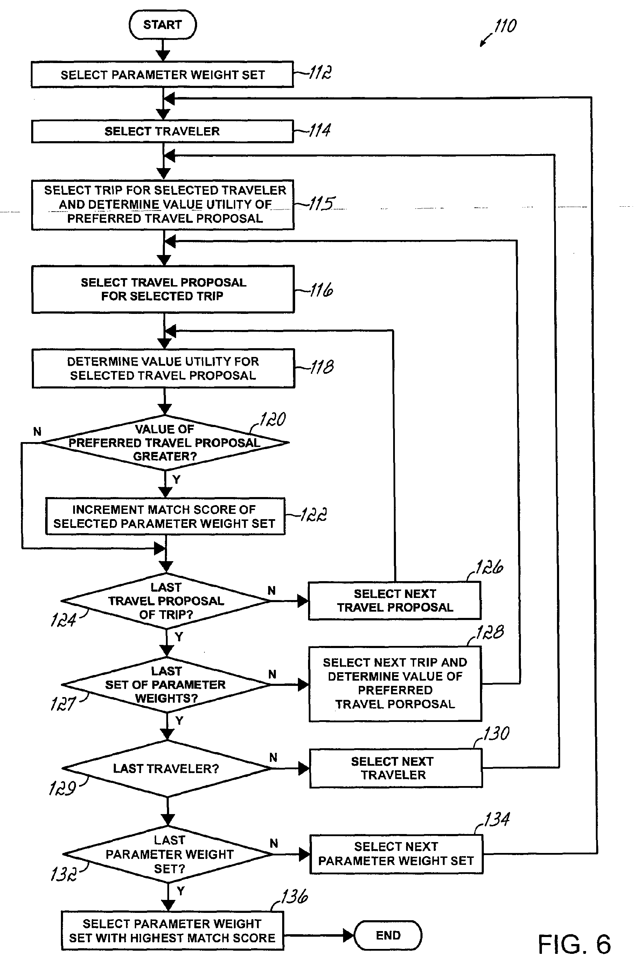

Referring now to FIG. 6, a flow chart illustrates a process 110 that may be used to determine the parameter weight set $[w_{c1}, w_{c2}, ... w_{cn}]$ for the value utility function V described by Equation 1. The process 110 may be performed, for example, by the reservation system 16, or by any other suitable computer system.

In block 112, the process 110 may select a parameter weight set from a plurality of parameter weight sets. Each of the parameter weight sets may comprise an array of parameter weights $[w_{c\_1}, w_{c\_2}, ... w_{c\_n}]$ including at least one parameter weight $w_{c\_x}$ with a value different from the corresponding weight $w_{c\_x}$ in the other parameter weight sets. The parameter weight sets may thereby provide a range of values for each of the parameter weights. Each parameter weight may be represented by the same number of discrete values across the plurality of weight sets, or by a different number of discrete values across the plurality of weight sets. In cases where the numbers of discrete values vary from one parameter weight to the next, the number of discrete values may depend on a desired sensitivity of the value utility function V to a particular parameter. For example, a parameter having relatively little impact on how travelers value trip proposals may have only two possible weights. In contrast, a parameter that has a relatively large impact on how travelers value trip proposals may have five or more possible weights. In response to selecting the weight set, the process 110 may proceed to block 114.

In block 114, the process 110 may select a traveler to analyze from a plurality of travelers in a travel database. The travel database may be maintained, for example, by the GDS and/or reservation system 16. The plurality of travelers may be defined based on a common characteristic, such as business travelers traveling for a particular company, that traveled during a specified period of time, or may comprise all the travelers in the travel database. In response to selecting the traveler, the process 110 may proceed to block 115.

In block 115, the process 110 may select a trip taken by the traveler. The trip may be identified in the travel database based on the identity of the traveler, the destination and origination city pair, the date of travel, or any other suitable characteristic or combination of characteristics of the trip. The trip characteristics may include trip requirements, which may include search terms used to search for travel proposals matching the trip requirements. In any case, a corresponding plurality of travel proposals that would have satisfied the trip requirements may be associated with the trip in the travel database, or may be generated in response to the process 110 selecting a trip to analyze. As described above, one of the plurality of travel proposals may be flagged or otherwise identified as the travel proposal preferred by the traveler without regard to cost. The process 110 may determine the value utility for the preferred travel proposal by applying the selected parameter weight set to the preferred travel proposal using Equation 1 before proceeding to block 116.

In block 116, the process 110 may select a travel proposal from the plurality of travel proposals before proceeding to block 118. In block 118, the process 110 may determine the value utility for the selected travel proposal by applying the selected parameter weight set to the selected travel proposal using Equation 1. The process may then proceed to block 120.

In block 120, the process 110 may determine if the value utility V of the preferred travel proposal is higher than the value utility V of the selected travel proposal. In response to the value utility V of the preferred travel proposal being higher than the value utility V of the selected travel proposal ("YES" branch of decision block 120), the process 110 may proceed to block 122 and increment a match score of the selected parameter weight set before proceeding to block 124. In response to the value utility *V* of the preferred travel proposal not being higher than the value utility *V* of the selected travel proposal ("NO" branch of decision block 120), the process 110 may proceed to block 124 without incrementing the match score of the selected parameter weight set.

In block 124, the process 110 may determine if the currently selected travel proposal is the last travel proposal of the plurality of travel proposals associated with the trip being analyzed. That is, the process 110 may determine if value utilities have been determined for each of the travel proposals in the plurality of travel proposals. In response to a determination that the currently selected travel proposal is not the last travel proposal ("NO" branch of decision block 124), the process 110 may proceed to block 126 and select the next travel proposal from the plurality of travel proposals before returning to block 118. In response to a determination that the currently selected travel proposal is the last travel proposal ("YES" branch of decision block 124), the process 110 may proceed to block 127.

In block 127, the process 110 may determine if there are any additional trips taken by the traveler that have not been analyzed. If the traveler has taken additional trips that have not been analyzed ("NO" branch of decision block 127), the process may proceed to block 128. In block 128, the process 110 may select another trip taken by the traveler for analysis. The process 110 may also determine the value utility of the preferred travel proposal for the selected trip using the current parameter weight set before returning to block 116. The updated value utility for the preferred travel proposal may then be available for comparison with value utilities determined for other travel proposals. If the there are no additional trips taken by the traveler that have yet to be analyzed, the process 110 may proceed to block 129.

In block 129, the process 110 may determine if the currently selected traveler is the last traveler in the plurality of travelers being analyzed. That is, the process 110 determines if each traveler of the plurality of travelers has been analyzed. If the traveler is not the last traveler in the plurality of travelers being analyzed ("NO" branch of decision block 129), the process 110 may proceed to block 130 and select the next traveler before returning to block 115.

If the currently selected traveler is the last traveler of the plurality of travelers ("YES" branch of decision block 129), the process 110 may proceed to block 132. In block 132, the process 110 may determine if the currently selected parameter weight set is the last parameter weight set. If match scores have not been determined for each parameter weight set of the plurality of parameter weight sets ("NO" branch of decision block 132), the process 110 may proceed to block 134. In block 134, the process 110 may select the next parameter weight set before returning to block 114.

In response to a determination that the currently selected parameter weight set is the last parameter weight set to be analyzed ("YES" branch of decision block 132), the process 110 may proceed to block 136. In block 136, the process 110 may select the parameter weight set having the highest match score. The parameter weight set with the highest match score may represent the parameter weighting that is most likely to accurately identify the preferred travel proposal as having a higher value utility than other non-preferred travel proposals. In the event that more than one parameter weight set has the same match score, an average or composite value utility weight set may be determined by calculating a barycenter of the parameter weight sets having the highest match score. The barycenter may be determined by any suitable means, such as by calculating the centroid of each of the parameter weights.

To prevent a traveler that takes a large number of business trips from skewing the results, the match score for each parameter weight may be modified so that the preferences of each traveler are given equal weight. In an alternative embodiment, the match score may include multiple trips taken by a single traveler, in which case travelers taking a larger number of trips would have a potentially larger effect on the resulting composite parameter weight set. In any case, the composite value utility weight set may then be used in conjunction with Equation 1 to determine the value utility for travel proposals as described above.

Persons having ordinary skill in the art will understand that the process 110 depicted in FIG. 6 is for illustrative purposes, and additional variations of the process 110 could be used to determine the parameter weight set. For example, the nesting of process loops could be altered so that multiple parameter weights are scored for each travel proposal before selecting the next travel proposal. Embodiments of the invention are therefore not limited to the depicted process 110.

In block 138 of process 80, the process 80 may aggregate the balance factor and intra-price preferences extracted from the payer in blocks 88 and 90, and the value preferences extracted from the travelers in block 106. These aggregated parameters may be used to provide coefficients for the equations defining the composite utility function *U*(*P*, *V*). In response to receiving a search query from the user system 12, the process 80 may receive the utility function coefficients, search result data 140, and traveler personal data 142. The search result data 140 may include information relating to the price, availability, and other defining characteristics of travel proposals including products such as airline flights, hotel rooms, and rental cars. The search result data 140 may be obtained from one or more of the product provider systems 14, a database associated with the reservation system 16, or from any other suitable database accessible by the reservation system 16 in response to a search query received from the user system 12. The process 80 may also receive personal data 142 relating to the traveler in question, such as memberships in frequent flyer or frequent hotel clubs, personal preferences regarding seating location on an aircraft, preferred rental car characteristics, or any other suitable personal data.

In block 144, the process 80 may select a number of travel proposals from the plurality of travel proposals identified by the search result data 140. These travel proposals may be selected based on their composite utility scores, which may be determined for each travel proposal of the plurality of travel proposals using Equation 3 as discussed above. For example, the process 80 may select the five trip proposals having the highest composite utility scores $U(P, V)$, and display these travel proposals to the traveler as the best or most relevant search results.

Because the process 110 described in FIG. 6 identifies a single weight set that reflects the preferences of the plurality of travelers, travel proposals selected in block 144 are based on a single "average" traveler. That is, the composite utility used to rank travel proposals may fail to take into account traveler-specific value preferences. However, it may at times be desirable to provide more personalized recommendations by selecting a weight set based at least in part on the personal preferences of the specific traveler to whom travel proposals are being displayed.

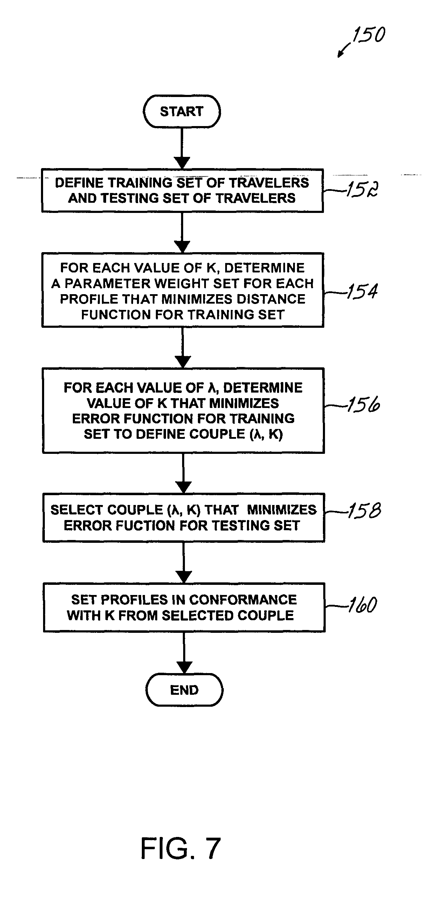

Referring now to FIG.7, a flow chart illustrates a process 150 that may be used to determine a plurality of "typical traveler profiles" for use in classifying travelers. These profiles may be used to classify travelers into multiple groups based on one or more similarities in the preferences of the travelers. The process 150 may determine an optimal number of profiles and a parameter weight set for each profile based on an analysis of a plurality of travelers. This plurality of travelers may include, for example, all travelers that have traveled for a particular corporation during a specified window of time, such as the previous year. Travelers performing searches may then be assigned to the profile having a parameter weight set that that most closely matches their personal preferences.

The closeness of the match may be determined based on a "distance" between the traveler and the profile. This distance may be based on the number of preferred travel options that are matched using the parameter weight set associated with the profile. For example, the distance may be provided by the following distance function:

$$(1 - P_{MATCH}) \quad \text{(Equation 29)}$$

where $P_{MATCH}$ represents a percentage of preferred travel options that were accurately identified using the parameter weight set associated with the profile. Thus, a profile having a parameter weight set that accurately identified every preferred travel profile selected by the traveler would yield a distance from the traveler of 0. In contrast, a profile having a parameter weight set that failed to identify any of the preferred travel proposals selected by the traveler would yield a distance from the traveler of 1.

By using the parameter weight set associated with the profile closest to the traveler, the value utility function $V$ used to determine the composite utility values may better reflect the specific preferences of the traveler in question as compared to systems using a single parameter weight set across all travelers. This may enable the value utility function V to more closely match traveler specific value preferences. Embodiments of the reservation system 16 that include a plurality of profiles may thereby provide a more personalized recommendation than embodiments that use a single profile.

In block 152, the process 150 may divide the plurality of travelers into a training sub-set and a testing sub-set. The travelers in the training sub-set may be used to determine a number of profiles K to be defined, as well the parameter weight set to be associated with each profile. The travelers in the testing sub-set may be used to determine how well the profiles defined using the training sub-set identify the preferred travel options selected by the travelers in the testing sub-set. The training and testing sub-sets may be defined by randomly selecting travelers from the plurality of travelers for inclusion in either the training or testing sub-set. In an embodiment of the invention, the training sub-set may include 70% of the plurality of travelers, and the testing sub-set may include the remaining 30% of the plurality of travelers. However, persons having ordinary skill in the art would understand that other ratios could be used to divide the travelers between the training and testing sub-sets. Embodiments of the invention are therefore not limited to the exemplary 70/30 ratio described above. In response to defining the training and testing sub-sets of travelers, the process 150 may proceed to block 154.

In block 154, the process 150 may determine, for each value K of a plurality of values of $K_1$-$K_M$ (e.g., $K = 2$ through $K = 10$), a set of $K$ profiles each having a parameter weight set that minimizes the distance function $(1-P_{MATCH})$ for the training sub-set. This may be accomplished using cluster analysis techniques. For example, $K$ initial parameter weight sets may be initially chosen at random by associating a different parameter weight set with each of the K provisional profiles. Each traveler in the training sub-set may then be assigned to the closest provisional profile as determined by the distance function $(1-P_{MATCH})$, thereby defining K subsets of travelers. A new parameter weight set may then be selected for each subset of travelers that minimizes the distance function $(1-P_{MATCH})$ for that subset. Each traveler in the training sub-set may then be re-assigned to the closest provisional profile using the new parameter weight sets to calculate the distance function $(1-P_{MATCH})$. This process may be repeated until each parameter weight set converges on a fixed set of values. To prevent convergence on a local minimum from affecting the results, the clustering algorithm may be repeated several times using different initial parameter weight sets.

For a given plurality of travelers being analyzed, there may be an optimal number of profiles K that balances profile fit verses profile predictive value to produce a minimum amount of preferred travel proposal selection error for the travelers in the testing sub-set. For example, defining a large number of profiles $K$ may result in an average distance between the travelers in the training sub-set and the closest matching profile being less than the average distance for a small number of profiles $K$. That is, a large $K$ may result in a better average fit between the travelers and the profiles to which they are matched. However, increasing $K$ may also correspondingly reduce the number of sample points (e.g., training travelers) available to define each profile. Profiles based on fewer sample points may have reduced predictive value as compared to profiles based on a larger number of sample points, so that the resulting value utility function is less accurate.

To account for an expected reduction in predictive value as the number of profiles is increased beyond the optimal number of profiles, a regularization parameter $\lambda$ may be used to provide a penalty on the training set for increasing the value of $K$. The regularization parameter $\lambda$ may reduce over-fitting by adding a cost value proportional to $K$. This cost value may be added to the distance function provided by Equation 29. In an embodiment of the invention, the cost value may be a product of the regularization parameter $\lambda$ and the number of profiles $K$, yielding the following error function:

$$(1 - P_{MATCH}) + \lambda \times K \quad \text{(Equation 30)}$$

where $(1 - P_{MATCH})$ represents the distance between the travelers and their corresponding profiles across the plurality of travelers being analyzed, and $\lambda \times K$ represents the cost value associated with increasing $K$. The regularization parameter $\lambda$ thereby provides an adjustable parameter that may be used to balance fitting and predictive value for the plurality of travelers being analyzed.

Once the profiles have been determined for each value of $K$, the process 150 may proceed to block 156. In block 156, the process 150 may determine the value of $K$ that minimizes the error function for each of a plurality of regularization parameters $\lambda_1$-$\lambda_N$. The error function may be calculated using the travelers in the training sub-set and the parameter weight sets determined for each profile in block 154. In an exemplary embodiment of the invention, a set of regularization parameters may have values that increase geometrically by a common ratio of approximately 2 starting with $\lambda_1 = 1 \times 10^{-4}$ and ending with $\lambda_{13} = 0.4$, so that $\lambda_1 = 1 \times 10^{-4}$, $\lambda_2 = 2 \times 10^{-4}$, $\lambda_3 = 4 \times 10^{-4}$...$\lambda_{13} = 0.4$. However, other types of sequences, values, and numbers of regularization parameters $\lambda$ may be used, and embodiments of the invention are not limited to the numerical examples for $K$ and $\lambda$ provided herein. In any case, each regularization parameter $\lambda$ may be paired with the corresponding K that produces the minimum error for the training sub-set to yield a plurality of regularization parameter/profile number couples $(\lambda_1, K_{\lambda 1})$, $(\lambda_2, K_{\lambda 2})$ ... $(\lambda_N, K_{\lambda N})$.

In block 158, the process 150 may determine a value for the distance function $(1 - P_{MATCH})$ provided by Equation 29 for each of the regularization parameters $K_{\lambda 1}, K_{\lambda 2}$ ... $K_{\lambda N}$ identified in block 156 using the travelers in the testing sub-set. The set of profiles associated with the regularization parameter $K_X$ producing the lowest distance function value with the testing sub-set may then be selected as identifying the optimal set of profiles.

The process 150 may then proceed to block 160 and set profiles in the reservation system 16 in conformance with the optimal set of profiles. By using the training sub-set of travelers to determine the regularization parameter/profile pairs $(\lambda_1, K_{\lambda 1})$, $(\lambda_2, K_{\lambda 2})$ ... $(\lambda_N, K_{\lambda N})$, and the testing sub-set of travelers to determine the optimum regularization parameter/profile pair $(\lambda_X, K_X)$, embodiments of the invention may provide a built-in check of the predictive accuracy of the selected set of profiles in determining the value utility for travelers.

In operation, travelers may be assigned to the profile in the optimal set of profiles that provides the highest match score between the traveler's preferred travel options and the parameter weight set associated with the assigned profile. In the event that two profiles produce the same match score, one of the two profiles may be selected at random, or the traveler may be asked to select an additional preferred travel option from a plurality of travel options to break the tie. Travel proposals may then be selected for display essentially as described above with respect to FIGS. 5 and 6 using the set of weight parameters associated with the selected profile to define the value utility function $V$ for the traveler. By assigning travelers to one of a plurality of profiles, the composite utility $U(P, V)$ may select travel proposals that more closely reflect the preferences of the traveler than embodiments that lack the typical traveler profile feature.

Persons having ordinary skill in the art would understand that the program code embodying any of the embodiments of the invention described herein is capable of being individually or collectively distributed as a program product in a variety of different forms. In particular, the program code may be distributed using a computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The methods described herein can be implemented by computer program instructions supplied to the processor of any type of computer to produce a machine with a processor that executes the instructions to implement the functions/acts specified herein. These computer program instructions may also be stored in a computer readable medium that can direct a computer to function in a particular manner. To that end, the computer program instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified and/or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), and/or across one or more hardware platforms, it should be appreciated that the invention is not limited to the specific organization and allocation of program functionality described herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "composed of', or variants thereof are used in either the detailed description or the claims, such terms are intended to be inclusive in a manner similar to the term "comprising."

According to one aspect, the present invention is characterized by the following points:

1. A computer program product for characterizing a plurality of travel proposals that satisfies a first travel request, the computer program product comprising:

a non-transitory computer readable storage medium; and
program instructions stored on the non-transitory computer readable storage medium that, when executed by a processor, cause the processor to:

receive first data identifying a preferred travel proposal for each of a plurality of first travelers, each preferred travel proposal being selected from the plurality of travel proposals;
analyze the first data to define a first utility function that quantifies a value of each travel proposal;
receive second data relating to a price sensitivity from a payer;
analyze the second data to define a second utility function that quantifies a price of each travel proposal; and
define a third utility function as a weighted sum of the first and second utility functions, the third utility function having an output that quantifies a composite utility for each travel proposal.

2. The computer program product of point 1 wherein the first utility function comprises a weighted sum of a plurality of fourth utility functions, and each travel proposal is defined by a set of parameters, each parameter of the set of parameters providing an input to one of the fourth utility functions.

3. The computer program product of point 2 wherein the program instructions are configured to analyze the first data to define the first utility function by causing the processor to:

define a plurality of weight sets, each weight set having a different combination of weights, each weight corresponding to one of the fourth utility functions;
determine a match score for each weight set of the plurality of weight sets based on the first data; and
select the weight set having the highest match score for weighting the sum of the fourth utility functions.

4. The computer program product of any of points 1 to 3 wherein the program instructions are further configured to cause the processor to:

define a first travel proposal having a first price and a first set of parameters;
define a second travel proposal having a second price and a second set of parameters; and provide third data to the payer, the third data defining all but one of the first and second prices and the first and second sets of parameters, wherein the second data defines the one of the first and second prices and the first and second sets of parameters not defined by the third data, and the second data is defined by the payer so that the composite utility for the first travel proposal equals the composite utility for the second travel proposal as determined by the payer.

5. The computer program product of any of points 1 to 4 wherein the program instructions are further configured to cause the processor to:

receive a second travel request from a second traveler, the second travel request sharing a common parameter with the first travel request;
determine a second plurality of travel proposals that satisfies the second travel request;
rank the second plurality of travel proposals based on the output of the third utility function; and
select one or more travel proposals of the second plurality of travel proposals to display to the second traveler based on the ranking.

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicant's general inventive concept.

**Claims**

1.   A method of characterizing a plurality of travel proposals that satisfies a first travel request, the method comprising:

receiving, at a computer, first data identifying a preferred travel proposal for each of a plurality of first travelers, each preferred travel proposal being selected from the plurality of travel proposals;
analyzing the first data with the computer to define a first utility function that quantifies a value of each travel proposal;
receiving second data relating to a price sensitivity from a payer;
analyzing the second data with the computer to define a second utility function that quantifies a price of each travel proposal; and
defining a third utility function as a weighted sum of the first and second utility functions, the third utility function having an output that quantifies a composite utility for each travel proposal.

2.   The method of claim 1 wherein the first utility function comprises a weighted sum of a plurality of fourth utility functions, and each travel proposal is defined by a set of parameters, each parameter of the set of parameters providing an input to one of the fourth utility functions.

3.   The method of claim 2 wherein analyzing the first data with the computer to define the first utility function comprises:

defining a plurality of weight sets, each weight set having a different combination of weights, each weight corresponding to one of the fourth utility functions;
determining a match score for each weight set of the plurality of weight sets based on the first data; and
selecting the weight set having the highest match score for weighting the sum of the fourth utility functions.

**4.** The method of claim 3 wherein determining the match score for each weight set comprises:

defining the weighted sum of fourth utility functions based on the weight set for which the match score is being determined;
for each first traveler, determining an output of the first utility function for each travel proposal;
comparing the output of the first utility function for the preferred travel proposal to the output of the first utility function for each of the other travel proposals; and
incrementing the match score of the weight set for which the match score is being determined each time the output of the first utility function for the preferred travel proposal is higher than the output of the first utility function for the travel proposal to which the preferred travel proposal is being compared.

**5.** The method of any of the preceding claims further comprising:

defining a first travel proposal having a first price and a first set of parameters;
defining a second travel proposal having a second price and a second set of parameters; and
providing third data to the payer, the third data defining all but one of the first and second prices and the first and second sets of parameters, wherein the second data defines the one of the first and second prices and the first and second sets of parameters not defined by the third data, and the second data is defined by the payer so that the composite utility for the first travel proposal equals the composite utility for the second travel proposal as determined by the payer.

**6.** The method of claim 5 wherein the second data defines the second price, and analyzing the second data with the computer comprises:

setting a sample number equal to a first numerical value;
defining the first set of parameters to produce a maximum output of the first utility function;
defining the second set of parameters to produce a minimum output of the first utility function;
defining the first price to produce a minimum output of the second utility function;
associating the first price with the sample number in an array; and
in response to the second price being defined:

incrementing the sample number;
associating the second price with the sample number in the array;
setting the first price equal to the second price;
defining a new second price from the second data;
setting the second price equal to the new second price; and
repeating incrementing the sample number, associating the second price with the sample number in the array, setting the first price equal to the second price, defining the new second price from the second data, and setting the second price to the new second price so long as the new second price can be defined.

**7.** The method of claim 6 further comprising:

in response to not being able to define the new second price, setting a sample size equal to the sample number;
defining the first price as equal to a lowest price in the array;
defining the second price to produce the maximum output of the second utility function;
defining the second set of parameters to produce the minimum output of the first utility function;
determining the first set of parameters from the second data, the first set of parameters causing the composite utility for the first travel proposal to equal the composite utility for the second travel proposal as determined by the payer;
determining a weight for the second utility function based on the sample size and the output of the first utility function for the first set of parameters;
incrementing the sample number;
associating the second price with the sample number in the array; and
defining the output of the second utility function for each price in the array based on the weight of the second utility function and the sample number corresponding to each price in the array.

**8.** The method of any of the preceding claims further comprising:

receiving a second travel request from a second traveler, the second travel request sharing a common parameter with the first travel request;

determining a second plurality of travel proposals that satisfies the second travel request;

ranking the second plurality of travel proposals with the computer based on the output of the third utility function; and

selecting one or more travel proposals of the second plurality of travel proposals to display to the second traveler based on the ranking.

9. The method of any of the preceding claims 1 further comprising:

defining a first sub-set of first travelers from the plurality of first travelers;

defining a second sub-set of first travelers from the plurality of first travelers, the second sub-set including at least one first traveler not included in the first sub-set;

defining a first plurality of sets of profiles, each set of profiles including a different number of profiles;

for each set of profiles of the first plurality of profiles, determining a weight set for each profile of the set of profiles that minimizes a distance between the set of profiles and the first travelers in the first sub-set;

defining a plurality of regularization parameters;

for each regularization parameter, determining the set of profiles of the first plurality of sets of profiles that minimizes an error function using the first travelers in the first sub-set and adding the set of profiles to a second plurality of sets of profiles; and

selecting the set of profiles from the second plurality of sets of profiles that minimizes the distance function for the second sub-set of first travelers, wherein analyzing the first data with the computer to define the first utility function includes associating each first traveler with one of the profiles of the selected set of profiles, and using the weight set of the associated profile to define the first utility function for the first traveler.

10. An apparatus for characterizing a plurality of travel proposals that satisfies a first travel request, the apparatus comprising:

a processor; and

a memory operatively coupled with the processor, the memory including program instructions that, when executed by the processor, cause the apparatus to:

receive first data identifying a preferred travel proposal for each of a plurality of first travelers, each preferred travel proposal being selected from the plurality of travel proposals;

analyze the first data to define a first utility function that quantifies a value of each travel proposal;

receive second data relating to a price sensitivity from a payer;

analyze the second data to define a second utility function that quantifies a price of each travel proposal; and

define a third utility function as a weighted sum of the first and second utility functions, the third utility function having an output that quantifies a composite utility for each travel proposal.

11. The apparatus of claim 10 wherein the first utility function comprises a weighted sum of a plurality of fourth utility functions, and each travel proposal is defined by a set of parameters, each parameter of the set of parameters providing an input to one of the fourth utility functions.

12. The apparatus of claim 11 wherein the program instructions are configured to analyze the first data to define the first utility function by causing the processor to:

define a plurality of weight sets, each weight set having a different combination of weights, each weight corresponding to one of the fourth utility functions;

determine a match score for each weight set of the plurality of weight sets based on the first data; and

select the weight set having the highest match score for weighting the sum of the fourth utility functions.

13. The apparatus of any of claims 10 to 12 wherein the program instructions are further configured to cause the processor to:

define a first travel proposal having a first price and a first set of parameters;

define a second travel proposal having a second price and a second set of parameters; and

provide third data to the payer, the third data defining all but one of the first and second prices and the first and second sets of parameters, wherein the second data defines the one of the first and second prices and the first and second sets of parameters not defined by the third data, and the second data is defined by the payer so that the composite utility for the first travel proposal equals the composite utility for the second travel proposal as determined by the payer.

14. The apparatus of claim 13 wherein the program instructions are further configured to cause the processor to:

set a sample number equal to a first numerical value;
define the first set of parameters to produce a maximum output of the first utility function;
define the second set of parameters to produce a minimum output of the first utility function;
define the first price to produce a minimum output of the second utility function;
associate the first price with the sample number in an array; and
in response to the second price being defined:

increment the sample number;
associate the second price with the sample number in the array;
set the first price equal to the second price;
define a new second price from the second data;
set the second price equal to the new second price; and
repeat incrementing the sample number, associating the second price with the sample number in the array, setting the first price equal to the second price, defining the new second price from the second data, and setting the second price to the new second price so long as the new second can be defined.

15. The apparatus of any of claims 10 to 14 wherein the program instructions are further configured to cause the processor to:

receive a second travel request from a second traveler, the second travel request sharing a common parameter with the first travel request;
determine a second plurality of travel proposals that satisfies the second travel request;
rank the second plurality of travel proposals based on the output of the third utility function; and
select one or more travel proposals of the second plurality of travel proposals to display to the second traveler based on the ranking.

FIG. 1

FIG. 2

_50_

(High Price) 0% _52_

PRICE _58_

_62_

_63_

_64_ _65_

_53_

_66_

_67_

_68_ _54_

(Low Price) 100%

0%
(Low Value)

VALUE _60_

100%
(High Value)

## FIG. 3

_92_

P₅

_98_

1

_104_

P₄

0.8

_103_

P₃

0.6

_102_

P₆

P₂

0.4

_101_

P₁

_96_

0.2

_100_

P₀

0

_94_

200      1200      2200      3200      4200

## FIG. 5

EP 2 874 109 A1

FIG. 4

START

SELECT PARAMETER WEIGHT SET —112

SELECT TRAVELER —114

SELECT TRIP FOR SELECTED TRAVELER AND DETERMINE VALUE UTILITY OF PREFERRED TRAVEL PROPOSAL —115

SELECT TRAVEL PROPOSAL FOR SELECTED TRIP —116

DETERMINE VALUE UTILITY FOR SELECTED TRAVEL PROPOSAL —118

VALUE OF PREFERRED TRAVEL PROPOSAL GREATER? —120

N

Y

INCREMENT MATCH SCORE OF SELECTED PARAMETER WEIGHT SET —122

LAST TRAVEL PROPOSAL OF TRIP? —124    N    SELECT NEXT TRAVEL PROPOSAL —126

Y

LAST SET OF PARAMETER WEIGHTS? —127    N    SELECT NEXT TRIP AND DETERMINE VALUE OF PREFERRED TRAVEL PORPOSAL —128

Y

LAST TRAVELER? —129    N    SELECT NEXT TRAVELER —130

Y

LAST PARAMETER WEIGHT SET? —132    N    SELECT NEXT PARAMETER WEIGHT SET —134

Y

SELECT PARAMETER WEIGHT SET WITH HIGHEST MATCH SCORE —136    END

110

FIG. 6

/150

START

DEFINE TRAINING SET OF TRAVELERS
AND TESTING SET OF TRAVELERS — 152

FOR EACH VALUE OF K, DETERMINE
A PARAMETER WEIGHT SET FOR EACH
PROFILE THAT MINIMIZES DISTANCE — 154
FUNCTION FOR TRAINING SET

FOR EACH VALUE OF λ, DETERMINE
VALUE OF K THAT MINIMIZES
ERROR FUNCTION FOR TRAINING — 156
SET TO DEFINE COUPLE (λ, K)

SELECT COUPLE (λ, K) THAT MINIMIZES — 158
ERROR FUCTION FOR TESTING SET

SET PROFILES IN CONFORMANCE — 160
WITH K FROM SELECTED COUPLE

END

FIG. 7

Europäisches
Patentamt

European
Patent Office

Office européen
des brevets

## EUROPEAN SEARCH REPORT

Application Number

EP 13 29 0288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * | 1-15 | INV. G06Q10/02 G06Q50/14 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 27 February 2014 | Meijs, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 29 0288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | - - - - - | | |

TECHNICAL FIELDS
SEARCHED      (IPC)

The present search report has been drawn up for all claims

| Place of search | Date of completion of the search | Examiner |
|---|---|---|
| The Hague | 27 February 2014 | Meijs, Koen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)